# FASCICULE DE BREVET EUROPEEN

(11) **EP 2 937 554 B1**
(45) Date de publication et mention de la délivrance du brevet: **23.11.2016**
(21) Numéro de dépôt: 15159389.4
(22) Date de dépôt: 17.03.2015
(51) Int. Cl.: F02N 11/04, F02N 11/08, F02B 67/06, B60W 50/02, B60W 50/035, B60W 10/06, B60W 10/08, B60W 10/30, B60W 30/192, B60W 20/00, B60K 6/52

(54) **Procédé de diagnostic pour la détection d'un glissement de la courroie d'accessoires d'un groupe motopropulseur**
Diagnoseverfahren zum Erkennen eines Schlupfes des Aggregate-Antriebsriemens eines Antriebsstranges
Diagnostic method for detecting a slip in the accessory drive belt of a power train

(30) Priorité: 24.04.2014 FR 1453674
(43) Date de publication de la demande: 28.10.2015
(73) Titulaire: PEUGEOT CITROËN AUTOMOBILES SA, 78140 Vélizy-Villacoublay (FR)
(72) Inventeur: Marchyllie, Alexis, 92170 VANVES (FR); Robert, François Xavier, 75008 PARIS 08 (FR); Aloisi, Andrea, 40124 Bologna (IT)

(56) Documents cités:
- FR-A1- 2 965 880
- JP-A- 2012 017 724
- US-A1- 2013 131 899
- US-A1- 2013 138 280

## Description

Le domaine de l'invention concerne un procédé de diagnostic d'un groupe motopropulseur de véhicule automobile pour la détection d'un glissement d'une courroie.

Dans un véhicule automobile, le groupe motopropulseur comporte un moteur thermique et un alternateur accouplés par une courroie d'accessoires au niveau d'un arbre de sortie du vilebrequin du moteur thermique et au niveau d'un arbre de sortie d'un alternateur, ce dernier étant chargé de prélever du couple moteur pour alimenter en énergie électrique un consommateur, notamment une batterie et un réseau électrique de bord.

Typiquement, l'alternateur permet également d'assister le moteur thermique lors de son démarrage. Lors d'un démarrage assisté il entraine en rotation l'arbre du moteur thermique jusqu'à ce que celui-ci atteigne un régime moteur suffisant pour un fonctionnement autonome, c'est à dire par la combustion d'un carburant injecté dans la chambre de combustion.

Dans cette description, on désigne par le terme « régime moteur » une vitesse de rotation de l'arbre du vilebrequin d'un moteur thermique ou « régime alternateur » la vitesse de rotation de l'arbre de sortie d'un alternateur, par exemple exprimée en tour par minute. Une consigne de couple désigne une requête de commande ordonnant l'action d'un effort en rotation sur arbre de rotation, exprimée en N.m.

La courroie d'accessoires peut également être accouplée à d'autres équipements, notamment un compresseur de climatisation, une pompe à eau ou une pompe de direction assistée hydraulique. La courroie d'accessoires est généralement plate et, sous-contrainte d'un fort couple de prélèvement, il est fréquent qu'elle soit sujette au phénomène de glissement lorsque celle-ci est humide. Le glissement correspond à une perte d'adhérence entrainant une perte de couple et donc de puissance mécanique et électrique pouvant mener à une baisse de performance du groupe motopropulseur.

Par ailleurs, cette situation peut engendrer des risques bien plus pénalisants que la baisse de performance. Il est possible que l'alternateur ne soit alors pas en mesure de fournir le couple nécessaire pour le redémarrage du moteur thermique. Cette situation est problématique pour les véhicules conventionnels qui peuvent ne pas démarrer, et plus encore pour les véhicules hybrides électriques dans lesquels le moteur thermique est arrêté temporairement lors d'un mode de roulage en tout électrique. On comprend qu'un non redémarrage du moteur lors du roulage présente un risque de sécurité important.

Pour éviter cette situation à risque, il est courant d'opérer des diagnostics lors du roulage pour détecter un glissement de la courroie d'accessoires dans le but de maintenir le moteur tournant en cas de glissement avéré et ainsi éviter un échec de redémarrage. Un procédé de diagnostic connu consiste à mesurer le régime du moteur thermique et le régime de l'alternateur, puis de comparer les régimes mesurés et de détecter un glissement de la courroie en fonction du résultat de la comparaison au regard un seuil d'écart de régime.

La demanderesse a déjà déposé la demande de brevet FR2965880, intitulée procédé de détection d'un glissement d'une courroie d'accessoires, reposant sur ce principe de comparaison des régimes. Ce procédé consiste, lors de la phase d'arrêt du moteur thermique à effectuer le diagnostic entre le moment où le flux d'air admis dans des chambres de combustion devient nul et le moment où le régime moteur devient nul. Lors de cette phase le couple moteur est inversement supérieur au régime moteur.

En cas de détection de glissement, la procédure d'arrêt du moteur est interrompue et celui-ci est alors redémarré. L'inconvénient de ce procédé réside dans le fait que le couple réalisable par le moteur thermique à bas régime est limité et peut se révéler insuffisant, au moment de la détection du glissement, pour assurer un retour du régime moteur au ralenti. La détection peut ainsi aboutir à un calage moteur.

En effet, le couple de l'alternateur peut être insuffisant, même à bas régime, pour garantir la détection d'un glissement si peu de consommateurs de courant du véhicule ne sont actifs.

Il est connu également d'un procédé d'entrainement du moteur thermique en roulage électrique, dans un but de détection d'un glissement de la courroie et le redémarrage immédiat par un système de démarrage alternatif, par exemple un démarreur ou un démarrage inertiel par fermeture contrôlée de la chaine de traction. De fait, ce procédé se limite aux véhicules hybrides. Or, sur un tel type de véhicule, le démarreur est potentiellement inutilisable lorsque le véhicule roule, et un démarrage inertiel n'est possible qu'avec une boite de vitesse particulière. Ainsi, sur de nombreux véhicules ce procédé de détection est inapplicable.

Il existe donc un besoin d'améliorer le procédé de diagnostic de détection de glissement de la courroie d'accessoires. En particulier, pour couvrir les situations de redémarrage nécessitant un couple moteur important et pour éviter un calage du moteur thermique si une requête de redémarrage est levée tardivement suite à la détection d'un glissement, lorsque le régime moteur est trop faible. De plus, on recherche à éviter le recours à un démarreur alternatif lors d'une détection d'un glissement.

Plus précisément, l'invention concerne un procédé de diagnostic d'un groupe motopropulseur de véhicule automobile pour la détection d'un glissement d'une courroie d'accessoires accouplant en rotation un arbre de sortie d'un vilebrequin d'un moteur thermique et un arbre de sortie d'un alternateur commandé par une consigne de couple alternateur issue d'une première fonction de distribution d'énergie.

Le procédé comporte les étapes suivantes :
a) la détermination du régime moteur et du régime de l'alternateur,
b) la comparaison des régimes déterminés,
c) la détection du glissement de la courroie en fonction du résultat de la comparaison,
   et, selon l'invention, il comporte également, simultanément aux étapes a), b) et c), les étapes suivantes :
d) la détermination d'une consigne de couple alternateur issue d'une deuxième fonction de distribution d'énergie,
e) la comparaison des valeurs absolues des consignes de couple alternateur issue de la première et de la deuxième fonction de distribution,
f) la détection d'une requête d'arrêt du moteur thermique,
g) puis, seulement en cas de détection, la commande de la consigne de couple alternateur ayant la valeur absolue la plus grande parmi les consignes issues de la première et la deuxième fonction.

Selon une variante du procédé, à la suite de l'arrêt du moteur thermique, le diagnostic est interrompu lorsque le régime moteur atteint un seuil en dessous duquel le moteur ne peut être redémarré de façon autonome.

Selon une autre variante du procédé, à la suite de l'arrêt du moteur thermique, le diagnostic est interrompu lorsque le régime moteur atteint une valeur comprise entre 0 tr/min et 1000 tr/min.

Selon une variante du procédé, la consigne de couple alternateur issue de la deuxième fonction de distribution d'énergie est destinée à au moins recharger une batterie électrique.

L'invention concerne également un procédé de commande de l'arrêt d'un moteur thermique, comportant :
- l'une des variantes du procédé de diagnostic et
- si un glissement de la courroie d'accessoires est détectée alors la requête d'arrêt du moteur thermique est interrompue, et
- si un glissement de la courroie d'accessoires n'est pas détecté alors la requête d'arrêt du moteur thermique est maintenue.

L'invention concerne également un ensemble de diagnostic d'un groupe motopropulseur de véhicule automobile pour la détection d'un glissement d'une courroie d'accessoires accouplant en rotation un arbre de sortie d'un vilebrequin d'un moteur thermique et un arbre de sortie d'un alternateur commandé par une consigne de couple alternateur issue d'une première fonction de distribution d'énergie, les dits moyens de diagnostic comprenant :
- des capteurs pour mesurer ou estimer le régime du moteur, le régime de l'alternateur,
- un calculateur programmé pour, b) comparer le régime du moteur et le régime de l'alternateur et, c) détecter le glissement de la courroie d'accessoires en fonction d'un résultat de cette comparaison.

Selon l'invention, le calculateur est programmé pour :
d) déterminer une consigne de couple alternateur issue d'une deuxième fonction de distribution d'énergie,
e) comparer les valeurs absolues des consignes de couple alternateur issue de la première et de la deuxième fonction de distribution,
f) détecter une requête d'arrêt du moteur thermique,
g) puis, seulement en cas de détection, commander la consigne de couple alternateur ayant la valeur absolue la plus grande parmi les consignes issues de la première et la deuxième fonction.

L'invention prévoit un véhicule automobile équipé dudit ensemble de diagnostic.

Par ailleurs, l'invention prévoit un programme informatique comportant des instructions lisibles par un calculateur, comportant un processeur lié à une mémoire programmable, pour commander ledit ensemble de diagnostic et appliquer les variantes du procédé de diagnostic.

L'invention prévoit un support lisible par un calculateur contenant l'enregistrement du programme informatique.

Le procédé de diagnostic permet de sécuriser l'arrêt du moteur thermique d'un véhicule. Cette procédure est de plus en plus fréquente dans les stratégies de contrôle du moteur thermique des véhicules hybrides lors de roulage à haute vitesse. Le procédé permet la diminution de polluants et la réduction de la consommation de carburant.

Il permet d'améliorer également l'agrément de conduite en cas de redémarrage du moteur lors ce que celui-ci est en procédure d'arrêt.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 représente un schéma d'un groupe motopropulseur de véhicule hybride pouvant opérer le procédé de diagnostic pour détecter un glissement de la courroie d'accessoires,
- la figure 2 représente un schéma du superviseur est des fonctions de distribution d'énergie exécutées pour l'élaboration de la consigne de couple de l'alternateur.
- la figure 3 représente un chronogramme de signaux d'état de fonctionnement du groupe motopropulseur et en particulier la consigne de l'alterno-démarreur lorsque le procédé de diagnostic est opéré.

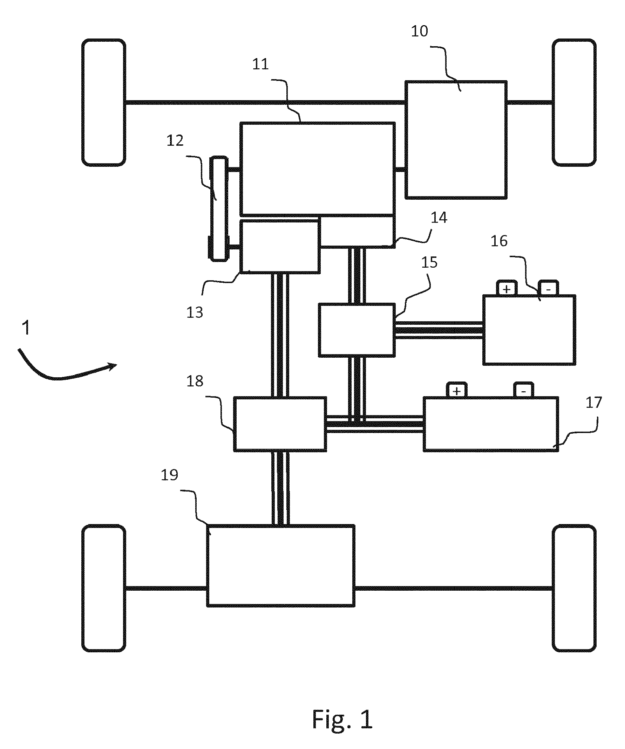

Le procédé de diagnostic selon l'invention s'applique aux véhicules hybrides. La figure 1 représente un véhicule hybride électrique dont le groupe motopropulseur 1 est constitué d'un moteur thermique 11 apte à fournir un couple aux roues du train avant et une machine électrique arrière 19 apte à fournir un couple aux roues du train arrière.

L'invention s'applique aux différentes architectures de groupes motopropulseurs hybrides, par exemple hybride série, hybride parallèle ou une combinaison de type hybride série-parallèle.

L'invention s'applique également à un véhicule conventionnel non hybride, c'est à dire un véhicule propulsé uniquement par la combustion du moteur thermique et comportant un alternateur accouplé au moteur thermique par une courroie d'accessoires.

Le groupe motopropulseur 1 selon la figure 1 comprend donc un moteur thermique 11 alimenté en carburant et une machine électrique 19 alimentée par une réserve d'énergie 17 régénérable, dans ce cas-ci une batterie électrique haute tension, par exemple 200 volt.

Le moteur thermique 11 transmet un couple aux roues au train avant par l'intermédiaire d'une boite de vitesse 10 permettant de modifier le couple de sortie du moteur à la consigne de couple aux roues. La chaine de traction du groupe motopropulseur 1 comprend également un moyen de couplage et découplage, de type embrayage non représenté sur le figure 1, et permet d'ouvrir ou fermer la chaine de traction.

Par ailleurs, le groupe motopropulseur 1 comprend un onduleur 18 et un convertisseur de tension 15, l'ensemble permettant ainsi de convertir un courant alternatif issu de l'alternateur 13 et de la machine électrique 19 en tension continue. Un réseau électrique haute tension relie la batterie 17, la machine électrique 19 et le convertisseur de tension 15, et un réseau basse tension, typiquement 12v, relie le convertisseur 15 et la batterie 16 et le démarreur électronique 14.

Lorsque l'alternateur fonctionne en mode dit de « générateur », l'alternateur 13 prélève du couple au moteur thermique 11 et génère de l'énergie électrique pour des consommateurs d'un ou des réseaux électriques du groupe motopropulseur. Cette énergie électrique est consommée par le réseau de bord ainsi que pour la recharge de l'une des batteries 16 ou 17 ou des deux à la fois. Dans ce mode de fonctionnement l'alternateur est piloté par une consigne de couple.

Lorsque l'alternateur fonctionne en moteur électrique, l'alternateur 13 consomme à son tour de l'énergie électrique et transmet un couple au moteur thermique 11, notamment en cas d'assistance au démarrage. L'alternateur 13 est alors piloté par une consigne de fourniture de couple au moteur thermique 11.

Le moteur thermique 11 et l'alternateur 13 sont accouplés par la courroie d'accessoires 12. L'objectif de l'invention est de détecter un glissement de cette courroie lors du roulage du véhicule, préalablement à un arrêt du moteur thermique 11. Grâce à l'invention, en cas de détection d'un glissement, l'arrêt du moteur thermique peut être empêché ou annulé si la procédure d'arrêt est déjà déclenchée.

En outre, il est essentiel que le groupe motopropulseur 1 soit piloté par un superviseur électronique, non représenté sur la figure 1, afin de coordonner les équipements du groupe motopropulseur. Ce superviseur peut être un circuit intégré pouvant être constitué de un ou plusieurs calculateurs selon la stratégie de décentralisation de l'intelligence. Par exemple, des calculs spécifiques à un composant peuvent être exécutés au niveau du composant même. On comprend donc que le superviseur ne se limite pas à un unique composant de calcul mais peut être un ou plusieurs calculateurs du système.

Le superviseur est programmé pour piloter le moteur thermique 11 et l'alternateur 13 par diverses requêtes pouvant être des requêtes de régime, des requêtes de consigne de couple et des requêtes de fonctionnement tournant et d'arrêt du moteur et de l'alternateur.

Plus précisément, pour opérer les fonctions du procédé de diagnostic, le superviseur réalise les calculs de commande du moteur thermique 11 et de l'alternateur 13. Il s'agit notamment des calculs des commandes de couple.

Les fonctions intervenant pour les opérations de contrôle du moteur thermique 11 et l'alternateur 13 sont les suivantes :
- une fonction d'interface de la volonté du conducteur permettant de récolter les informations du véhicule. Cette fonction permet de transmettre les données du véhicule au superviseur.
- Une fonction de traduction de la volonté d'accélérer du conducteur en une consigne de couple d'un fournisseur de couple. Le superviseur calcule le couple nécessaire pour réaliser l'instruction du conducteur.
- Une fonction de calcul des limitations organiques des équipements du groupe motopropulseur, plus précisément de couple.
- Une fonction de calcul du couple de chaque organe pour fournir le couple roue que désire le conducteur et de répartition des couples entre les différents fournisseurs de couple. Cette fonction détermine également le couple de chaque organe en fonction de stratégies énergétiques du groupe motopropulseur. Des fonctions de distribution d'énergie déterminent le couple à réaliser par le moteur thermique 11, l'alternateur 13 et la machine électrique 19. En particulier, dans le cadre du procédé de diagnostic au moins deux fonctions de distribution d'énergie interviennent pour déterminer le couple opéré par l'alternateur 13 durant le procédé de diagnostic.
- Une fonction de transmission d'une consigne de couple vers le moteur thermique 11 accompagnée d'une requête de fonctionnement ou d'arrêt du moteur. Cette dernière requête peut être codée sur un format booléen, un niveau haut indiquant un besoin de fonctionnement tournant et un niveau bas indiquant un besoin de d'arrêt du moteur.
- Une fonction de transmission d'une consigne de couple vers l'alternateur 13. Cette fonction intervient lorsque le superviseur commande l'intervention de l'alternateur 13 pour augmenter le couple agissant sur la courroie.

Les consignes de couples à destination du moteur thermique 11 et de l'alternateur 13 dépendent de la volonté du conducteur, du mode de motorisation du véhicule et de données de statut des équipements électroniques dont l'alimentation dépend des stratégies d'optimisation énergétique.

Les consignes à destination du démarreur 14 sont également élaborées par le superviseur. Celui-ci peut intervenir lorsque le véhicule est à l'arrêt.

Le procédé de diagnostic pour la détection d'un glissement de la courroie d'accessoires repose sur la comparaison du régime moteur et du régime de l'alternateur. Le superviseur est programmé pour opérer les étapes suivantes :
a) La détermination du régime moteur et du régime de l'alternateur. Des capteurs du groupe motopropulseur mesurent les régimes recherchés.
b) La comparaison des régimes déterminés. Le superviseur est programmé pour comparer les régimes mesurés ou estimés.
c) La détection du glissement de la courroie en fonction du résultat de la comparaison. Le superviseur est programmé pour calculer la valeur absolue de la différence des régimes au regard d'un seuil caractéristique d'un glissement. Si la valeur absolue de la différence des régimes mesurés est supérieure au seuil, pendant un temps prédéfini, par exemple 500 millisecondes, alors un glissement de la courroie est détecté, signifiant probablement un niveau d'humidité important au niveau de la courroie. En cas de détection d'un glissement le superviseur est programmé pour émettre une indication de glissement lisible par les équipements du groupe motopropulseur, ainsi qu'exécuter une procédure de retour ou de maintien en fonctionnement tournant du moteur thermique 11.

Et, simultanément aux étapes a), b) et c), le superviseur est programmé pour exécuter les étapes suivantes :
d) Déterminer une consigne de couple alternateur (Cbasm) issue d'une deuxième fonction de distribution d'énergie (F2). Cette consigne de couple est au moins équivalente à une estimation d'un couple de test de résistance au glissement, nommé dans la description Cres.
e) Comparer la valeur absolue des consignes de couple alternateur issue de la première et de la deuxième fonction de distribution (F1, F2).
f) Détecter une requête d'arrêt (RQ_mth) du moteur thermique. Dans ce mode de réalisation, la fonction de diagnostic du superviseur est programmée pour surveiller le signal booléen d'état RQ_mth. Un passage à l'état bas indique qu'un arrêt moteur est prévu. Bien entendu, une autre logique de détection d'une requête d'arrêt moteur peut être exploitée si d'autres signaux sont à disposition. A cet instant, le moteur thermique fonctionne à un régime élevé, par exemple plus de 1500 tr/min. Ensuite, le moteur thermique 11 est piloté pour réduire son régime moteur et préparer un arrêt.
g) Et seulement en cas de détection, commander la consigne de couple alternateur (Cbasm) ayant la valeur absolue la plus grande parmi les consignes issues de la première et la deuxième fonction (F1, F2). Le superviseur est programmé pour profiter de la fenêtre temporelle entre l'apparition de la requête d'arrêt et l'arrêt effectif du moteur pour commander un couple important à l'alternateur 13. Cette commande ne modifie pas le couple aux roues et n'est ainsi pas ressentie par le conducteur.

En forçant l'alternateur 13 à fournir un couple important, le diagnostic assure qu'un glissement sera détecté à temps pour permettre un redémarrage autonome.

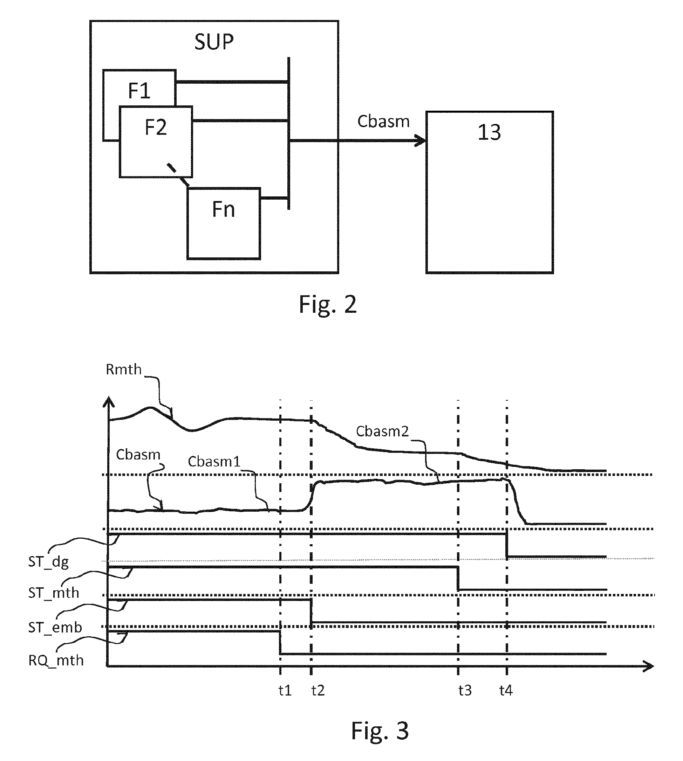

La figure 2 représente schématiquement le superviseur SUP et l'alternateur 13. L'alternateur 13 reçoit une commande de consigne de couple Cbasm provenant du superviseur SUP. Cette commande Cbasm est déterminée à partir de plusieurs fonctions de distribution d'énergie F1, F2, ..., Fn. Les fonctions F1, F2, ..., Fn commandent l'alternateur par des consignes de couples de valeurs distinctes.

Plus précisément, le superviseur mémorise une estimation du couple de résistance au glissement Cres. Cette estimation correspond à la valeur absolue d'un couple devant pouvoir être exercé sur la courroie d'accessoires sans qu'un glissement soit existant.

Cette valeur est estimée lors du dimensionnement du groupe motopropulseur et est préenregistrée dans le programme commandant le diagnostic chargé dans la mémoire du superviseur. L'estimation est calculée à partir d'une évaluation du couple pouvant être prélevé par l'ensemble des consommateurs dans une situation de roulage.

Ou dans une variante, cette valeur est estimée en cours de vie du véhicule par une fonction de calcul dédiée du programme de diagnostic. Par exemple, le superviseur évalue le couple de prélèvement maximal pouvant être commandé à l'instant de la détection d'une requête d'un arrêt moteur.

Une fonction de distribution d'énergie F2 élabore la consigne de couple Cbasm. L'estimation du couple de test de résistance au glissement Cres participe à l'élaboration de la consigne en couple Cbasm de la fonction de distribution F2 appliquée lors du diagnostic. La commande de couple Cbasm issue de F2 est définie pour prélever un couple au moins équivalent à ce couple de test Cres, dans les limites organiques des équipements du groupe motopropulseur.

De préférence, la détection d'un glissement est optimale pour un couple Cres ayant une valeur absolue comprise entre 10 N.m et 20 N.m.

Pour opérer la consigne de couple de l'alternateur 13 issue de la fonction de distribution d'énergie F2, le superviseur peut commander une phase de récupération d'énergie en chargeant une batterie ou plusieurs batteries ou commander le fonctionnement d'un équipement prélevant de l'énergie sur l'alternateur 13.

Bien entendu, il est possible que le superviseur SUP pilote l'alternateur 13 pour prélever un couple supérieur au couple de résistance Cres, notamment si la consommation du réseau de bord est importante et si l'état de charge des batteries permet une phase de recharge. Dans ce cas, la valeur absolue de la consigne de couple de l'alternateur peut être supérieure à la valeur absolue du couple de résistance au glissement Cres.

La figure 3 représente les séquences du procédé de diagnostic selon l'invention. Le graphique représente six courbes fonction d'un axe temporel.
- La courbe Rmth représente le régime moteur en tour par minutes,
- la courbe Cbasm représente la consigne de couple de l'alternateur en N.m,
- la courbe ST_dg est un booléen indiquant si la fonction de la détection d'un glissement est active, à l'état haut, ou non, à l'état bas,
- la courbe ST_mth est un booléen d'état du moteur thermique, indiquant à l'état haut que le moteur est tournant, et à l'état bas que le moteur est à l'arrêt,
- la courbe ST_emb est un booléen d'état d'un embrayage de la chaine de traction, indiquant à l'état haut que la chaine est fermée et à l'état bas que la chaine est ouverte,
- la courbe RQ_mth est une requête de commande du moteur de type booléen, indiquant à l'état haut un besoin de fonctionnement tournant et à l'état bas un besoin d'arrêt du moteur.

Bien entendu, d'autres formats des requêtes et des informations d'état peuvent être employés pour la mise en oeuvre des fonctions du procédé de diagnostic dans le cadre de l'invention.

Avant l'apparition d'une requête d'arrêt du moteur thermique, ST_mth et RQ_mth sont à l'état haut. Le moteur thermique est en fonctionnement tournant et les étapes a), b, c) du diagnostic, qui sont la mesure du régime du moteur thermique et de l'alternateur, la comparaison des régimes et la détection du glissement, sont opérantes quel que soit le régime du moteur thermique. Ces étapes peuvent être réalisées en boucle selon une fréquence prédéterminée. Ces fonctions sont opérées dès la mise en fonctionnement tournant du moteur thermique.

De plus, avant t1, le superviseur commande une consigne de couple Cbasm dont la valeur absolue Cbasm1 est calculée par une première fonction de distribution d'énergie F1 dont le résultat dépend des besoins électriques des consommateurs et des stratégies d'optimisation énergétiques du groupe motopropulseur. Cette valeur dépend notamment des besoins du réseau de bord et des états de charge des batteries.

A t1, RQ_mth passe à l'état bas, une requête d'arrêt du moteur est émise. Suite à l'apparition de la requête d'arrêt du moteur thermique, les actionneurs du moteur thermique exécutent une suite actions dans le but d'arrêter le moteur. La séquence d'action est spécifique au protocole du moteur.

De plus, le signal d'état ST_dg est haut. Les étapes a), b) et c) sont toujours opérantes. Par ailleurs, le superviseur commande la consigne de couple de l'alternateur conformément à la première fonction de distribution d'énergie F1.

De plus, le régime Rmth du moteur thermique est élevé, par exemple de l'ordre de 2000tr/min.

Ensuite à t2, le superviseur commande l'ouverture de la chaine de traction, ST_emb passe à l'état bas. Cet événement provoque l'opération des actionneurs de l'embrayage pour son ouverture. Le procédé de diagnostic est conditionné pour détecter une requête d'arrêt du moteur et l'ouverture de la chaine de traction à partir des signaux RQ_mth et ST_emb.

Cbasm, antérieurement à t2 était calculée selon une première fonction de distribution d'énergie F1. A partir de l'événement de t2, lorsque ces deux conditions sont valides, le superviseur commande une consigne de couple alternateur Cbasm au moins équivalente à l'estimation du couple de résistance au glissement Cres ayant une valeur absolue Cbasm2, supérieure à Cbasm1. Cette consigne est élaborée par une deuxième fonction de distribution d'énergie F2.

Pour cela, le procédé de diagnostic comporte une étape de détermination de la valeur absolue Cbasm1 de la consigne de couple alternateur issue de la fonction de distribution d'énergie F1 et de la valeur absolue Cbasm2 de la consigne de couple alternateur issue de la fonction de distribution d'énergie F2. Puis, une étape de comparaison des valeurs absolues Cbasm 1 et Cbasm2 des consignes de couple alternateur issue de la première et deuxième fonction de distribution F1 et F2. Et le procédé comporte ensuite une étape de sélection de la consigne de couple ayant la valeur absolue la plus grande, Cbasm2 dans ce cas-ci, pour commander l'alternateur 13.

Toutefois, si la valeur absolue du couple de prélèvement calculée par la première fonction de distribution d'énergie F1 est supérieure à la valeur absolue de la consigne de couple issue de F2, alors la consigne Cbasm est maintenue commandée par la première fonction de distribution d'énergie F1.

En variante, le superviseur peut appliquer dès l'apparition de l'événement de requête de besoin d'arrêt du moteur thermique, soit dès t1, la consigne Cbasm de valeur Cbasm2 dont la valeur est équivalente à la valeur absolue de Cres, issue de la deuxième fonction de distribution d'énergie F2.

Entre la phase t1 et t2, les étapes a), b) et c) sont également maintenues actives en boucle.

La phase entre t2 et t3 correspond à une phase de régime de ralenti du moteur. Il s'agit d'une durée imposée au moteur suite à une demande d'arrêt afin de sécuriser l'arrêt moteur (redescente du régime turbo, vidange plénum admission, etc....). Dans cette phase le superviseur commande une baisse de régime contrôlée progressivement. Une fois ce temps écoulé, une commande adéquate des actionneurs du moteur thermique interrompt l'injection de carburant, correspondant à l'événement t3, et le régime moteur descend progressivement ensuite vers un régime nul.

La durée de la phase t2 à t4, ou en variante t1 à t4, permet d'évaluer le fonctionnement de la courroie sous consigne d'un couple ayant la valeur Cres, sécurisant les cas extrêmes de fort couple qui ne seraient pas identifiés si le réseau de bord avait une consommation faible à cet instant.

L'application du couple de l'alternateur Cbasm résultant de la deuxième fonction de distribution d'énergie F2 est commandée durant plusieurs cycles de l'arbre de rotation du vilebrequin avant l'arrêt du moteur et est maintenue après l'arrêt du moteur thermique jusqu'à un événement situé entre un régime moteur inférieur à 1000 tr/min et un régime moteur nul, par exemple 800 tr/min, correspondant à t4 sur le graphique de la figure 2.

Entre la phase t2 et t4, ou en variante t1 et t4, les étapes a), b) et c) sont également maintenue actives en boucle.

L'arrêt anticipé du diagnostic, avant l'arrêt complet du moteur (régime moteur nul), représenté par la mise à l'état bas du signal ST_dg permet d'assurer un redémarrage autonome du moteur thermique avec succès, auquel cas un glissement serait détecté. Ainsi, on évite une sensation de calage du moteur et d'importantes secousses si un glissement est détecté à très bas régime et que le moteur essaie de se relancer sans y parvenir de façon autonome.

Après t4, le procédé de diagnostic est interrompu, le signal ST_dg est à l'état bas, impliquant un arrêt moteur certain si le signal RQ_mth est maintenu bas (aucun glissement n'a été détecté avant t4 ou autre événement nécessitant un moteur à l'état tournant). Les étapes a), b), c), d), e), f), g) ne sont plus opérantes.

En variante, le superviseur peut être programmé pour opérer le diagnostic et l'application de Cbasm déterminée par la deuxième fonction de distribution d'énergie F2 jusqu'à l'arrêt du moteur à un régime nul. Dans ce cas-ci, le superviseur est programmé pour opérer un redémarrage assisté automatiquement commandé, par l'alternateur ou autre équipement de redémarrage le cas échéant, si un glissement est détecté.

Un procédé d'arrêt du moteur thermique exploitant le diagnostic de détection de glissement de la courroie est également opéré par le superviseur. Une fonction pouvant émettre une requête d'arrêt ou de fonctionnement tournant du moteur thermique 11 surveille le résultat des étapes a), b) et c). Si un glissement de la courroie d'accessoires est détecté alors la requête d'arrêt du moteur thermique est interrompue, et si un glissement de la courroie d'accessoires n'est pas détecté alors la requête d'arrêt du moteur thermique est maintenue.

L'interruption de la phase d'arrêt du moteur signifie que la courroie est probablement humide ne garantissant pas un redémarrage du moteur. Grâce au procédé, le moteur est redémarré lorsque le régime moteur Rmth est encore suffisamment élevé pour que la phase de redémarrage ne soit pas perceptible, ou du moins gênante pour les passagers.

De préférence, le procédé de diagnostic est mis en oeuvre avant chaque phase d'arrêt du moteur thermique.

L'invention s'applique aux moteurs thermiques de type essence et diesel.

Les fonctions de calcul et de commande du groupe motopropulseur pour la mise en oeuvre des étapes du procédé de diagnostic sont exécutées par un programme informatique mémorisé dans un circuit intégré à mémoire programmable du groupe motopropulseur, mémoire réinscriptible ou non effaçable. Il s'agit du superviseur du groupe motopropulseur comprenant un dispositif de calcul à microprocesseur associé à une mémoire programmable apte à exécuter les instructions du programme.

Un dispositif de mémorisation pouvant être mis en communication avec le superviseur et contenant le programme informatique pour l'application du procédé de diagnostic est également prévu.

L'invention est particulièrement avantageuse pour les véhicules hybrides dont les stratégies de commande recherche à augmenter la fréquence des arrêts du moteur thermique lors du roulage.

## Revendications

1. Procédé de diagnostic d'un groupe motopropulseur (1) de véhicule automobile pour la détection d'un glissement d'une courroie d'accessoires (12) accouplant en rotation un arbre de sortie d'un vilebrequin d'un moteur thermique (11) et un arbre de sortie d'un alternateur (13) commandé par une consigne de couple alternateur (Cbasm) issue d'une première fonction de distribution d'énergie (F1), l'alternateur (13) étant apte à fonctionner en mode générateur ou moteur électrique, le procédé comportant les étapes suivantes :
a) la détermination du régime moteur (Rmth) et du régime de l'alternateur,
b) la comparaison des régimes déterminés,
c) la détection du glissement de la courroie (12) en fonction du résultat de la comparaison,
le procédé étant **caractérisé en ce qu'**il comporte également, simultanément aux étapes a), b) et c), les étapes suivantes :
d) la détermination d'une consigne de couple alternateur issue d'une deuxième fonction de distribution d'énergie (F2),
e) la comparaison des valeurs absolues des consignes de couple alternateur issue de la première et de la deuxième fonction de distribution (F1, F2),
f) la détection d'une requête d'arrêt (RQ_mth) du moteur thermique (11),
g) puis, seulement en cas de détection d'une requête d'arrêt, la commande de la consigne de couple alternateur (Cbasm) ayant la valeur absolue la plus grande parmi les consignes issues de la première et la deuxième fonction (F1, F2).

2. Procédé selon la revendication 1, **caractérisé en ce que**, à la suite de l'arrêt du moteur thermique (11), le diagnostic est interrompu lorsque le régime moteur (Rmth) atteint un seuil en dessous duquel le moteur ne peut être redémarré de façon autonome.

3. Procédé selon la revendication 1, **caractérisé en ce que**, à la suite de l'arrêt du moteur thermique, le diagnostic est interrompu lorsque le régime moteur (Rmth) atteint une valeur comprise entre 0 tr/min et 1000 tr/min.

4. Procédé selon l'une quelconque des revendications précédentes, **caractérisé en ce que** la consigne de couple alternateur (Cbasm) issue de la deuxième fonction de distribution d'énergie (F2) est destinée à au moins recharger une batterie électrique (16 ; 17).

5. Procédé de commande de l'arrêt d'un moteur thermique, **caractérisé en ce qu'**il comporte :
- un procédé de diagnostic conforme à l'une quelconque des revendications 1 à 4, et
- si un glissement de la courroie d'accessoires (12) est détectée alors la requête d'arrêt du moteur thermique (RQ_mth) est interrompue, et
- si un glissement de la courroie d'accessoires (12) n'est pas détecté alors la requête d'arrêt du moteur thermique (RQ_mth) est maintenue.

6. Ensemble de diagnostic d'un groupe motopropulseur (1) de véhicule automobile pour la détection d'un glissement d'une courroie d'accessoires (12) accouplant en rotation un arbre de sortie d'un vilebrequin d'un moteur thermique (11) et un arbre de sortie d'un alternateur (13) commandé par une consigne de couple alternateur (Cbasm) issue d'une première fonction de distribution d'énergie (F1), les dits moyens de diagnostic comprenant :
- des capteurs pour mesurer ou estimer le régime du moteur (Rmth), le régime de l'alternateur,
- un calculateur programmé pour:
b) comparer le régime du moteur et le régime de l'alternateur et
c) détecter le glissement de la courroie d'accessoires (12) en fonction d'un résultat de cette comparaison,
**caractérisé en ce que** le calculateur est programmé pour:
d) déterminer une consigne de couple alternateur (Cbasm) issue d'une deuxième fonction de distribution d'énergie (F2),
e) comparer les valeurs absolues des consignes de couple alternateur issues de la première et de la deuxième fonction de distribution (F1, F2),
f) détecter une requête d'arrêt (RQ_mth) du moteur thermique,
g) puis, seulement en cas de détection d'une requête d'arrêt, commander la consigne de couple alternateur (Cbasm) ayant la valeur absolue la plus grande parmi les consignes issues de la première et la deuxième fonction (F1, F2).

7. Véhicule automobile, **caractérisé en ce qu'**il est équipé d'un ensemble conforme à la revendication 6.

8. Programme informatique comportant des instructions lisibles par un calculateur, comportant un processeur lié à une mémoire programmable, pour commander un ensemble de diagnostic conforme à la revendication 6 et appliquer le procédé selon l'une quelconque des revendications 1 à 5.

9. Support lisible par un calculateur contenant l'enregistrement du programme informatique selon la revendication 8.

## Patentansprüche

1. Verfahren zur Diagnose eines Antriebsstrangs (1) eines Kraftfahrzeugs zum Nachweis eines Gleitens eines Antriebsriemens (12), der in Rotation eine Abtriebswelle einer Kurbelwelle eines Verbrennungsmotors (11) und eine Abtriebswelle eines Generators (13) koppelt, der durch ein Generatordrehmoment-Einstellewert (Cbsam) gesteuert wird, der aus einer ersten Funktion der Leistungsverteilung (F1) stammt, wobei der Generator (13) ausgelegt ist, um im Modus eines Generators oder elektrischen Motors zu funktionieren, wobei das Verfahren die folgenden Schritte umfasst:
a) Bestimmen der Motordrehzahl (Rmth) und der Generatordrehzahl,
b) Vergleichen der bestimmten Drehzahlen,
c) Nachweis des Gleitens des Riemens (12) je nach dem Ergebnis des Vergleichs,
wobei das Verfahren **dadurch gekennzeichnet ist, dass** es auch, gleichzeitig mit den Schritten a), b) und c), die folgenden Schritte umfasst:
d) Bestimmen eines Generatordrehmoment-Einstellwerts, das aus einer zweiten Funktion der Leistungsverteilung (F2) stammt,
e) Vergleichen der absoluten Werte der Generatordrehmoment-Einstellwerte, die aus der ersten und der zweiten Verteilungsfunktion (F1, F2) stammen,
f) Nachweisen einer Stoppanfrage (RQ_mth) des Verbrennungsmotors (11),
g) dann, nur im Fall des Nachweises einer Stoppanfrage, Steuern des Generatordrehmoment-Einstellwerts (Cbsam) mit dem größten absoluten Wert unter den Einstellwerten, die aus der ersten und der zweiten Funktion (F1, F2) stammen.

2. Verfahren nach Anspruch 1, **dadurch gekennzeichnet, dass** nach dem Stopp des Verbrennungsmotors (11) die Diagnose unterbrochen wird, wenn die Motordrehzahl (Rmth) eine Schwelle erreicht, unter der der Motor nicht auf autonome Weise wiedergestartet werden kann.

3. Verfahren nach Anspruch 1, **dadurch gekennzeichnet, dass** nach dem Stopp des Verbrennungsmotors die Diagnose unterbrochen wird, wenn die Motordrehzahl (Rmth) einen Wert erreicht, der zwischen 0 tr/min und 1000 tr/min liegt.

4. Verfahren nach einem der vorhergehenden Ansprüche, **dadurch gekennzeichnet, dass** der Generatordrehmoment-Einstellwert (Cbsam), der aus der zweiten Funktion der Leistungsverteilung (F2) stammt, ausgelegt ist, um mindestens eine elektrische Batterie (16; 17) wiederaufzuladen.

5. Verfahren zur Steuerung des Stopps eines Verbrennungsmotors, **dadurch gekennzeichnet, dass** es Folgendes umfasst:
- ein Verfahren zur Diagnose nach einem der Ansprüche 1 bis 4, und
- wenn ein Gleiten des Antriebsriemens (12) nachgewiesen wird, dann wird die Stoppanfrage des Verbrennungsmotors (RQ_mth) unterbrochen, und
- wenn ein Gleiten des Antriebsriemens (12) nicht nachgewiesen wird, dann wird die Stoppanfrage des Verbrennungsmotors (RQ_mth) beibehalten.

6. Einheit zur Diagnose eines Antriebsstrangs (1) eines Kraftfahrzeugs zum Nachweis eines Gleitens eines Antriebsriemens (12), der in Rotation eine Abtriebswelle einer Kurbelwelle eines Verbrennungsmotors (11) und eine Abtriebswelle eines Generators (13) koppelt, der durch einen Generatodrehmoment-Einstellwert (Cbsam) gesteuert wird, der aus einer ersten Funktion der Leistungsverteilung (F1) stammt, wobei die Mittel zur Diagnose Folgendes umfassen:
- Sensoren, um die Motordrehzahl (Rmth), die Generatordrehzahl zu messen oder zu schätzen,
- einen Rechner, der programmiert ist, um:
b) die Motordrehzahl und die Generatordrehzahl zu vergleichen und
c) das Gleiten des Antriebsriemens (12) je nach einem Ergebnis dieses Vergleichs nachzuweisen, **dadurch gekennzeichnet, dass** der Rechner programmiert ist, um
d) einen Generatordrehmoment-Einstellwert (Cbsam) zu bestimmen, der aus einer zweiten Funktion der Leistungsverteilung (F2) stammt,
e) die absoluten Werte der Generatordrehmoment-Einstellwerte zu vergleichen, die aus der ersten und der zweiten Verteilungsfunktion (F1, F2) stammen,
f) eine Stoppanfrage (RQ_mth) des Verbrennungsmotors nachzuweisen,
g) dann, nur im Fall eines Nachweises einer Stoppanfrage, den Generatordrehmoment-Einstellwert (Cbsam) mit dem größten absoluten Wert unter den Einstellwerten zu steuern, die aus der ersten und der zweiten Funktion (F1, F2) stammen.

7. Fahrzeug, **dadurch gekennzeichnet, dass** es mit einer Einheit nach Anspruch 6 ausgestattet ist.

8. Computerprogramm, umfassend Anweisungen, die durch einen Rechner lesbar sind, umfassend einen Prozessor, der mit einem programmierbaren Speicher verbunden ist, um eine Einheit zur Diagnose nach Anspruch 6 zu steuern und das Verfahren nach einem der Ansprüche 1 bis 5 anzuwenden.

9. Lesbares Medium für einen Rechner, enthaltend die Aufzeichnung des Computerprogramms nach Anspruch 8.

## Claims

1. Method for diagnosing a power unit (1) of a motor vehicle for detecting slippage of an accessory belt (12) rotationally coupling an output shaft of a crankshaft of a heat engine (11) and an output shaft of an alternator (13), controlled by an alternator-torque reading (Cbasm) issuing from a first energy-distribution function (F1), the alternator (13) being able to function in generator mode or electric motor mode, the method comprising the following steps:
a) determination of the engine speed (Rmth) and of the alternator speed,
b) comparison of the speeds determined,
c) detection of slippage of the belt (12) according to the result of the comparison,
the method being **characterised in that** it also comprises, simultaneously with steps a), b) and c), the following steps:
d) determination of an alternator-torque value issuing from a second energy-distribution function (F2),
e) comparison of the absolute values of the alternator-torque readings issuing from the first and second distribution functions (F1, F2),
f) detection of a request (RQ_mth) to stop the thermal engine (11),
g) then, only in the case of detection of a stop request, control of the alternator-torque reading (Cbasm) having the highest absolute value among the readings issuing from the first and second functions (F1, F2).

2. Method according to claim 1, **characterised in that**, following the stoppage of the heat engine (11), the diagnosis is interrupted when the engine speed (Rmth) reaches a threshold below which the engine cannot be started autonomously.

3. Method according to claim 1, **characterised in that**, following the stoppage of the heat engine, the diagnosis is interrupted when the engine speed (Rmth) reaches a value of between 0 rev/min and 1000 rev/min.

4. Method according to any one of the preceding claims, **characterised in that** the alternator-torque reading (Cbasm) issuing from the second energy-distribution function (F2) is intended to at least recharge an electric battery (16, 17).

5. Method for controlling the stoppage of a heat engine, **characterised in that** it comprises:
- a diagnosis method according to any of claims 1 to 4, and
- if a slippage of the accessory belt (12) is detected then the request to stop the thermal engine (RQ_mth) is interrupted, and
- if a slippage of the accessory belt (12) is not detected then the request to stop the heat engine (RQ_mth) is maintained.

6. Diagnostic unit for a power unit (1) of a motor vehicle for detecting slippage of an accessory belt (12) rotationally coupling an output shaft of a crankshaft of a heat engine (11) and an output shaft of an alternator (13) controlled by an alternator-torque reading (Cbasm) issuing from a first energy-distribution function (F1), said diagnostic means comprising:
- sensors for measuring or estimating the speed of the engine (Rmth) and the speed of the alternator,
- a computer programmed:
b) to compare the speed of the engine and the speed of the alternator, and
c) to detect slippage of the accessory belt (12) according to a result of this comparison,
**characterised in that** the computer is programmed:
d) to determine an alternator-torque reading (Cbasm) issuing from a second energy-distribution function (F2),
e) to compare the absolute values of the alternator-torque readings issuing from the first and second distribution functions (F1, F2),
f) to detect a request (RQ_mth) to stop the thermal engine,
g) then, only in the case of detection of a stop request, to control the alternator-torque reading (Cbasm) having the highest absolute value among the readings issuing from the first and second function (F1, F2).

7. Motor vehicle, **characterised in that** it is equipped with an assembly according to claim 6.

8. Computer program containing instructions that can be read by a computer, comprising a processor connected to a programmable memory, to control a diagnostic unit according to claim 6 and to apply the method according to any of claims 1 to 5.

9. Medium that can be read by a computer, containing the recording of the computer program according to claim 8.
